Europäisches Patentamt

European Patent Office

Office européen des brevets

(11) Publication number: **0 134 208**
**B1**

(12) EUROPEAN PATENT SPECIFICATION

(45) Date of publication of patent specification: **09.09.87**

(51) Int. Cl.⁴: **C 01 D 1/28**

(21) Application number: **83900874.5**

(22) Date of filing: **28.01.83**

(86) International application number:
**PCT/US83/00130**

(87) International publication number:
**WO 84/02898 02.08.84 Gazette 84/18**

(54) PURIFICATION OF ALKALI METAL HYDROXIDES.

(43) Date of publication of application:
**20.03.85 Bulletin 85/12**

(45) Publication of the grant of the patent:
**09.09.87 Bulletin 87/37**

(84) Designated Contracting States:
**BE DE FR GB**

(56) References cited:
US-A-2 196 594
US-A-2 196 595
US-A-2 285 299
US-A-2 285 300
US-A-2 325 339
US-A-2 354 823
US-A-2 373 257
US-A-2 394 596
US-A-2 622 009
US-A-3 917 811
US-A-4 372 924

(73) Proprietor: **THE DOW CHEMICAL COMPANY**
**2030 Dow Center Abbott Road P.O. Box 1967**
**Midland, MI 48640 (US)**

(72) Inventor: **PORTER, David, L.**
**10153 Lariat Lane**
**Shreveport, LA 71106 (US)**

(74) Representative: **Weickmann, Heinrich, Dipl.-Ing.**
**et al**
**Patentanwälte Dipl.-Ing. H.Weickmann Dipl.-**
**Phys.Dr. K.Fincke Dipl.-Ing. F.A.Weickmann**
**Dipl.-Chem. B. Huber Dr.-Ing. H. Liska Dipl.-**
**Phys.Dr. J. Prechtel Postfach 860820**
**D-8000 München 86 (DE)**

**Description**

This invention relates to the purification of alkali metal hydroxides and more in particular to the removal of souble impurities from alkali metal hydroxides by contacting such hydroxides with ammonia.

Alkali metal hydroxides, such as sodium hydroxide, are generally produced commercially in the so-called mercury cells or diaphragm cells. In sodium hydroxide produced by mercury cells, a sodium chloride impurity may be present in an amount of roughly from 0.01 to 0.001 weight percent. A typical diaphragm cell aqueous effluent contains from 8 to 10 weight percent sodium hydroxide and 15 weight pecent sodium chloride. The diaphragm cell effluent is concentrated by evaporation to raise the sodium hydroxide concentration to about 50 weight percent and reduce the sodium chloride concentration. However, even after such reduction of the sodium chloride, the 50 percent aqueous sodium hydroxide solution from the diaphragm cell still contains from 1 to 2 eight percent sodium chloride.

A number of processes have been developed throughout the years to reduce the sodium chloride concentration in aqueous sodium hydroxide. Many patents have issued describing the removal of sodium chloride and sodium chlorate from aqueous solutions containing a 50 percent concentration of caustic soda. US—A—2,196,594 discloses an apparatus and process to purify a 50 percent or greater concentration of caustic liquor by countercurrently contacting the acqueous caustic liquor with liquid ammonia at a superatmospheric pressure and temperatures of from 50 to 100°C (122° to 212°F). US—A—2,196,595; US—A—2,285,299; US—A—2,285,300; US—A—2,349,596; US—A—2,325,339; US—A—2,354,823 and US—A—2,373,257 disclose still other processes for treating an aqueous sodium hydroxide containing solution with ammonia. The process of US—A—2,622,009 removes salt impurities from an aqueous caustic soda solution, containing from 45 to 50 percent caustic, using liquid ammonia and contact temperatures of from 54° to 71°C (130 to 160°F) at pressures above 21 kg/cm² (300 psi). These processes have been successful in eliminating a major portion of the sodium chloride impurity, but the existing ammonia-aqueous sodium hyrodixde impurity extracting processes have generally not been able to consistently reduce the sodium chloride impurity in the caustic to a concentration level closely approaching that of mercury cell caustic.

Consequently, it is desired to provide a process which can reduce the impurity (such as sodium chloride) concentration in an aqueous alkali metal hydroxide solution to a level approaching that of mercury cell caustic.

The hereinafter disclosed invention resides in a method to purify the liquid phases at a subatmospheric pressure, an impure alkali metal hydroxide by countercurrently contacting an aqueous solution of the hydroxide with liquid ammonia in a container having a first inlet for the impure hydroxide solution upwardly disposed from a second inlet for the ammonia, a first outlet for the purified hydroxide solution and a second outlet for the ammonia containing impurities extracted from the impure hydroxide solution, characterized in the steps of

(a) feeding an aqueous solution containing from 40 to 60 weight percent alkali metal hydroxide and at least a sodium chloride impurity into the first inlet;

(b) feeding sufficient ammonia into the second inlet to provide an ammonia to alkali metal hydroxide solution volume ratio of from 0.6:1 to 1:1;

(c) countercurrently flowing the hydroxide and ammonia through a bed of a substantially inert, insoluble particulate material in the container; and

(d) controlling the temperature of the purified hyroxide solution in the lower portion of the container within a range of from 68° to 77°C.

The two figures of the drawing schematically depict different embodiments of an apparatus in which the improved method of the present invention can be carried out. Identical numerals, distinguished by a letter suffix, within the figures represent parts having a similar function within the different embodiments.

In practice of one embodiment of the present invention, an aqueous solution containing an alkali metal hydroxide such as potassium hydroxide or more preferably sodium hydroxide with impurities dissolved therein, is fed into a generally cylindrical container 10 through a first inlet 12 in the container 10. Liquid ammonia (NH₃) with a preferred purity of at least about 90 (and more preferably at least about 95) weight percent and containing less than about 30 (and more preferably at less than about 10) parts per million (ppm) sodium chloride, is fed into a second inlet 14 of the container 10 and flows upwardly through the container countercurrenlty to the flow of the alkali metal hydroxide solution passing downwardly through the container.

In operation, the pressure within the container 10 is maintained at a sufficient level to insure that the ammonia and hyroxide solution are liquid during the extraction or purification process. When this is done, and the ammonia to alkali metal hydroxide volume ratio is from 0.6:1 to 1:1 and more preferably from 0.7:1 to 0.8:1, an ammonia-alkali metal hydroxide interface 16 appears in the container 10 at a position located between the first and second inlets 12 and 14, respectively.

A purified alkali metal hydroxide solution containing significantly less sodium chloride and sodium chlorate impurities than were present in the impure hydroxide solution is removed from the container 10 through a first outlet 18 in a lower portion of the container 10. The temperature of the purified hyrodoxide solution in the lower portion of the container 10 is preferably controlled to a temperature within a range of from 68° to 77°C (115° to 170°F). More preferably this temperature is controlled and maintained within a range of from 71° to 74°C (160° to 165°F) and most preferably at 72.2°C (162°F). The temperature of the purified hydroxide solution as it is removed from the container 10 through the first outlet 18 is at a temperature which is substantially the same as that in the lower portion of the container 10.

It has been surprisingly found that processing the hydroxide solution within the above-described temperature range combined with use of a bed of a substantially inert, insoluble particulate material in the container through which the hydroxide solution and ammonia flows results in the production of a purified alkali metal hydroxide solution, e.g. sodium hydroxide, with a reduced sodium chlorate concentration and a sodium chloride impurity level approaching that achievable in the so-called mercury cell caustic.

The particulate material is essentially insoluble and non-reactive with either the ammonia or the hydroxide solution at the temperatures and pressures utilized during the process. For example, polypopylene, polytetrafluoroethylene, nickel, Inconel, and the like, are sastisfactory for use in the present invention. Other suitable materials will be readily apparent to those skilled in the art. The size and configuration of the particulate material useful in the present invention will vary depending upon the size of the container in which the impurity extraction process is operated. The particulate material should provide a packed bed of sufficient porosity to permit adquate flow of the hydroxide solution and the ammonia therethrough without an undesired reduction in flow through the cylinder. Simultaneously, the particulate material should be sufficiently small to from a packed bed sufficiently dense to cause the hydroxide solution to flow in an agitated or somewhat turbulent manner through the cylider toward the first outlet 18. It has been determined that polypropylene "Flexirings" with average diameters of 1.6 and 2.54 cm (5/8 inch and 1 inch) are satisfactory materials for the bed when sodium hydroxide is treated in a column with a diameter of about 1.07 metres (3.5 feet).

An upper support plate 20 is suitably disposed across substantially the entire transverse cross section of the container 10 below the first inlet 12. The support plate 20 has a plurality of holes therein of a size sufficient to permit the desired flow of the hydroxide solution and ammonia therethrough and insufficient to permit passage of the particulate material 22. In like manner, a lower support plate 24 is disposed betwen the upper support plate 20 and the second inlet 14. The particulate material 22 in the bed supported by the support plate 24 can be the same or a different material and/or size and configuration than the material retained by the upper support plate 20.

Alternatively, the entirety or any portion of the cylinder between the first inlet 12 and the second inlet 14 can be packed with the particulate material 22 to form a bed of any desired depth.

Treatment of the impure ammonia withdrawn from a second outlet 26 to repurify the ammonia so that it may again be used in the disclosed process is performed by using technology readily available and known in the art. Likewise, further treatment of the purified hydroxide solution to, for example, form a more concentrated form of sodium hydroxide is carried out using techniques and equipment common in the industry.

The following examples are further illustrative of the invention.

### Examples 1-8

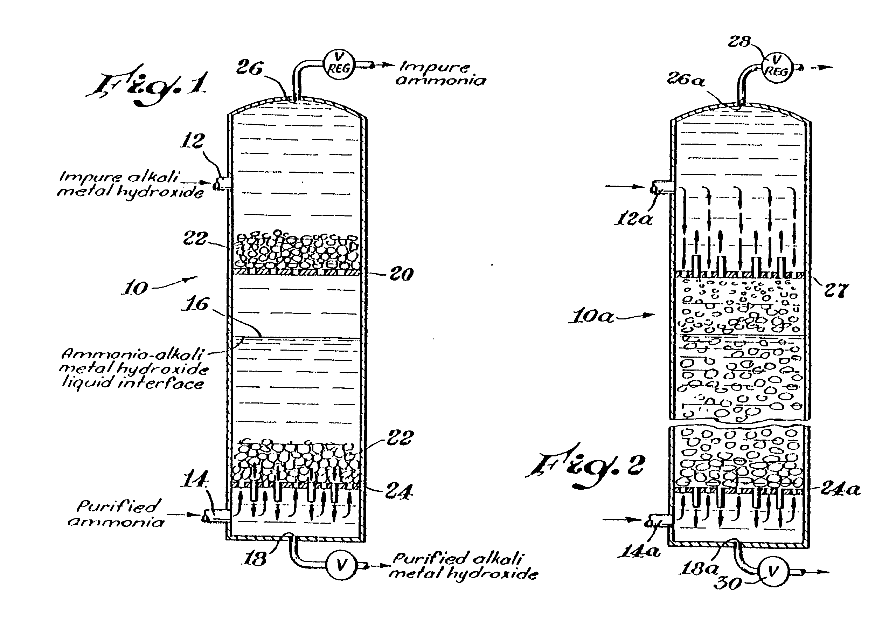

A 12.2 metre (40 feet) high, generally centrally positioned section of a 20.3 cm (8 inch) diameter by 18.3 metre (60 feet) high column extractor 10a shown in Figure 2 was packed between an upper retainer plate 27 and a lower support plate 24a (a distance of 12.2 meters) with 2.54 cm polypropylene "pall rings" (Example 4 was packed with "Flexipack" type 1 rings). Operation of the extractor 10a was begun by setting a pressure valve 28 to release when the pressure within the extractor 10a exceeded 26.4 km/cm² (375 psi). Sufficient amounts of water and purified liquid ammonia were fed into the extractor 10a through first and second inlets 12a and 14a, respectively, to provide a liquid concentration within the reactor of about 75 weight percent ammonia and about 25 weight percent water. When this composition had been obtained and the entire extractor was filled with liquid, the feed was stopped and the contents of the extractor heated to 70°C (158°F).

When the temperature had reached 70°C (158°F) within the extractor, the flow of solution of about 50 weight pecent sodium hydroxide and water was started through the first inlet 12a and liquid ammonia simultaneously passed into the lower portion of the extractor through the second inlet 14. The volume ratio of liquid ammonia to caustic solution flowing into the extractor was initially controlled at 0.75. Valve 30 remained closed until the ammonia-caustic solution interface level reached about the middle of the extractor, i.e. about one-half the height of the extractor; until this interface level was reached, effluent was removed from the extractor through a second outlet 26a. The valve 30 was opened after reaching this interface level and a purified 50 percent sodium hydroxide-water solution was continuously removed from the extractor through the first outlet 18a.

The Table lists operating parameters for Examples 1-8. It will be observed from the Table that the described process can reduced the sodium chloride concentration in the sodium hydroxide solution removed from the extractor to extremely low levels.

### Examples 9 and 10

Using an extractor with a diameter of 1.07 metres (42 inches) and a height of 18.3 metres (60 feet) with a 12.2 metre (40 foot) portion thereof packed with 2.54 cm (1 inch) (Example 9) of 1.6 cm (5/8 inch) (Example 10) polypropylene "Flexirings", a 50 percent sodium hydroxide solution was pumped as described above for Example 1-8.

| Example | Feed Flow Rate (lit/min) | | NH$_3$:NaOH Volume ratio | Extractor Temperature (°C) | | NaCl Concentration (Weight %) | | |
|---------|--------------------------|------|--------------------------|--------------------------|------|-------------------------------|-------------|----------------|
| | Ammonia | NaOH | | Bottom | Top | NH$_3$ Feed | NaOH Feed | NaOH Product |
| 1 | 4.47 | 6.36 | 0.70:1 | 70.0 | 65.0 | 0.002 | 1.00 | 0.007 |
| 2 | 3.52 | 5.22 | 0.67:1 | 70.0 | 65.6 | 0.061 | 0.97 | 0.012 |
| 3 | 5.90 | 7.95 | 0.74:1 | 70.0 | 72.8 | 0.0022 | 0.0144* | 0.0002 |
| 4 | 4.24 | 5.64 | 0.75:1 | 70.6 | 72.2 | 0.001 | 1.05 | 0.006 |
| 5 | 4.50 | 6.66 | 0.68:1 | 72.8 | 71.7 | 0.002 | 1.13 | 0.005 |
| 6 | 4.50 | 6.66 | 0.68:1 | 72.8 | 70.0 | 0.160 | 1.10 | 0.149 |
| 7 | 4.47 | 6.36 | 0.70:1 | 73.9 | 67.2 | 0.003 | 0.97 | 0.021 |
| 8 | 4.47 | 6.36 | 0.70:1 | 75.0 | 67.2 | 0.002 | 0.97 | 0.057 |
| 9 | 257.4 | 321.7 | 0.80:1 | 72.2 | 65.6 | 0.0001 | 0.97 | 0.0060 |
| 10 | 257.4 | 321.7 | 0.80:1 | 72.2 | 65.6 | 0.0001 | 0.98 | 0.0020 |

★ The NaOH solution treated had previously been processed through the extractor one time.

**0 134 208**

**Claims:**

1. A method to purify in liquid phases at a subatmospheric pressure, an impure alkali metal hydroxide by countercurrently contacting an aqueous solution of the hyroxide with liquid ammonia in a container having a first inlet for the impure hydroxide solution upwardly disposed from a second inlet for the ammonia, a first outlet for the purified hydroxide solution and a second outlet for the ammonia containing impurities extracted from the impure hydroxide solution characterized by the steps of

(a) feeding an aqueous solution containing from 40 to 60 weight percent alkali metal hydroxide and at least a sodium chloride impurity into the first inlet;

(b) feeding sufficient ammonia into the second inlet to provide an ammonia to alkali metal hydroxide solution volume ratio of from 0.6:1 to 1:1;

(c) contercurrently flowing the hydroxide and ammonia through a bed of a substantially inert, insoluble particulte material in the container; and

(d) controlling the temperature of the purified hyrdoxide solution in the lower portion of the container within a range of from 68° to 77°C.

2. The method of Claim 1 wherein the solution contains from 48 to 52 weight percent alkali metal hydroxide and wherein the ammonia fed into the container is at least 90 weight percent pure and contains less than 30 parts per million sodium chloride.

3. The method of Claim 1 or 2 wherein the alkali metal hydroxide is sodium hydroxide containing less than 1.2 weight pecent sodium chloride.

4. The method of Claims 1, 2 or 3 wherein the temperature is controlled within the range of from 71° to 74°C and the ammonia to alkali metal hydroxide ratio is from 0.7:1 to 0.8:1.


**Patentansprüche**

1. Verfahren zum Reinigen eines verunreinigten Alkalimetallydroxides in flüssigen Phasen bei subamosphärischem Druk durch gegenläufiges Inkontaktbringen einer wäßrigen Lösung des Hyroxides mit flüssigem Ammoniak in einem Behältnis mit einer ersten Einlaßöffnung für die verunreinigte Hydroxidlösung, die oberhalb einer zweiten Einlaßöffnung für den Ammoniak angebracht ist, einer ersten Auslaßöffnung für die Hydroxidlösung und einer zweiten Auslaßöffnung für der Ammoniak, der Verunreinigungen enthält, die aus der unreinen Hydroxidlösung extrahiert wurden, gekennzeichnet durch die Verfahrensschritte:

(a) Zuführen einer wäßrigen Lösung, die 40 bis 60 Gew.-% Alkalimetallhydroxid und mindestens eine Natriumchloridverunreinigung enthält in die erste Einlaßöffnung;

(b) Zuführen von ausreichendem Ammoniak in die zweite Einlaßöffnung, um eine Volumenverhältnis von Ammoniak zu Alkalimetallhydroxidlösung von 0,6:1 bis 1:1 herzustellen;

(c) gegenläufiges Strömen des Hyroxides und Ammoniaks durch eine Bett aus einem im wesentlichen inerten, unlöslichen teilchenförmigen Material in dem Behältnis; und

(d) Kontrollieren der Temperatur der gereinigten Hydroxidlösung in dem unteren Teil des Behältnisses innerhalb eines Bereiches von 68 bis 77°C.

2. Verfahren nach Anspruch 1, bei welchem die Lösung 48 bis 52 Gew.-% Alkalimetallhydroxid enthält und bei welchem die Ammoniakzufuhr in dem Behältnis mindestens zu 90 Gew.-% rein ist und weniger also 30 ppm Natriumchlorid enthält.

3. Verfahren nach Anspruch 1 oder 2, bei welchem das Alkalimetallhydroxid Natriumhydroxid ist, das weniger als 1,2 Gew.-% Natriumchlorid enthält.

4. Verfahren nach Anspruch 1, 2 oder 3, bei welchem die Temperatur in einem Bereich von 71 bis 74C kontrolliert wird und das Verhältnis von Ammoniak zu Alkalimetallhydroxid 0,7:1 bis 0.8:1 beträgt.

**Revendications**

1. Procédé de purification en phase liquide, sous pression subatmosphérique, d'un hydroxyde de métal alcalin impur, par mise en contact à contre-courant d'une solution aqueuse de l' hydroxyde avec de l'ammoniac liquide, dans un récipient ayant une première entrée pour la solution d'hyroxyde impur, disposée au-dessus d'une seconde entrée pour l'ammoniac, une première sorite pur la solution d'hydroxyde purifée et une seconde sortie pour l'ammoniac contenant les impuretées extraites de la solution d'hydroxyde impur, caractérisé par les étapes consistant à:

(a) introduire une solution aqueuese contenant de 40 à 60% en poids d'hydroxyde de métal alcalin et au moins une impureté constituée par due chlorure de sodium par la première entrée;

(b) introduire suffisamment d'ammoniac par la seconde entrée pour avoir un rapport volumique de l'ammoniac à la solution de métal alcalin de 0,6:1 à 1:1;

(c) faire passer à contre-courant l'hydroxyde et l'ammoniac à travers un lit de matériau particulaire insoluble, partiquement inerte, se trouvant dans le récipient; et

(d) adjuster la température de la solution d'hydroxyde purifiée, se trouvant dans la partie inférieure du récipient, entre 68 et 77°C.

5

**0 134 208**

2. Procédé selon la revendication 1, dans lequal la solution contient de 48 à 52% en poids d'hydroxyde de métal alcalin, et l'ammoniac introduit dans le récipient est d'une pureté d'au moins 90% en poids et contient moins de 30 parties par milion de chlorure de sodium.

3. Procédé selon la revendication 1 ou 2, dans lequal l'hydroxyde de métal alcalin est de l'hyroxyde de sodium contenant moins de 1,2% en poids de chlorure de sodium.

4. Procédé selon les revendications 1, 2 ou 3, dans lequel la température est ajustée entre 71 et 74°C et le rapport de l'ammoniac à l'hyroxyde de métal alcalin est de 0,7:1 à 0,8:1.

Fig. 1

26

V REG → Impure ammonia

12

Impure alkali metal hydroxide

22

20

10

16

Ammonio-alkali metal hydroxide liquid interface

22

14

24

Purified ammonia

18

V → Purified alkali metal hydroxide

Fig. 2

28

V REG →

26a

12a

27

10a

24a

14a

18a

30

V →

0 134 208